# EUROPÄISCHE PATENTANMELDUNG

(11) **EP 2 816 297 A1**
(43) Veröffentlichungstag der Anmeldung: **24.12.2014**
(21) Anmeldenummer: 14164218.1
(22) Anmeldetag: 10.04.2014
(51) Int. Cl.: F24H 7/00, F24D 13/02, H05B 3/20

(54) **Elektrisch betreibbarer Heizkörper sowie Verfahren zu dessen Herstellung**

(30) Priorität: 19.04.2013 DE 102013103993
(71) Anmelder: Solamagic GmbH, 07937 Zeulenroda-Triebes (DE)
(72) Erfinder: Grunewald, Andreas, 33378 Rheda-Wiedenbrück (DE)
(74) Vertreter: Dantz, Jan Henning

(57) **Zusammenfassung**

Ein elektrisch betreibbarer Heizkörper, mit mindestens einem in einem Gehäuse angeordneten Wärmespeicher (2), insbesondere einem Latentwärmespeicher und einem damit in Wirkverbindung stehenden elektrisch betreibbaren Heizelement (5), ist so ausgebildet, dass der mindestens eine Wärmespeicher (2) zusammen mit dem Heizelement (5) in einer einen Mantel bildenden Verschalung angeordnet sind, die gemeinsam als vormontierte Baueinheit im Gehäuse positioniert sind.

## Beschreibung

Die Erfindung betrifft einen elektrisch betreibbaren Heizkörper nach dem Oberbegriff des Anspruchs 1 sowie ein Verfahren zu dessen Herstellung.

Ein gattungsgemäßer Heizkörper ist in der DE 10 2008 009 789 A1 thematisiert. Als bevorzugte Installations-Orte werden dabei Innenräume angegeben, mit der Option einen solchen Heizkörper auch in geschützten Außenbereichen, beispielsweise unter Markisen, einzusetzen.

Wesentliche Bestandteile des Heizkörpers sind dabei ein Latentwärmespeicher sowie ein Heizelement, die in einem Gehäuse untergebracht sind. Prinzipiell betrifft die Erfindung aber auch Heizkörper, die mit anderen geeigneten Wärmespeichern ausgestattet sind, wie Schamott oder dergleichen.

Latentwärmespeicher, die auch als PCM (Phase-Change-Material) bezeichnet werden, da sie ihren Aggregatzustand, zumindest jedoch ihre Konsistenz, nach Aufnahme oder Abgabe von Wärme ändern, zeichnen sich durch eine hohe Wärmespeicherdichte sowohl hinsichtlich der Speicherkapazität wie auch der Speicherdauer aus.

Der bekannte Heizkörper bezieht seine Energie zur Wärmeerzeugung aus dem Stromnetz, wobei das Heizelement typischerweise als Widerstandsheizung ausgelegt ist.

In der JP H09-112 938 A ist ein Heizkörper offenbart, bei dem die Latentwärmespeicher in einer aus Beton bestehenden Halbschale untergebracht sind, die durch eine Isolierplatte verschlossen ist. Dabei liegt das Heizelement einerseits an der Isolierplatte und andererseits an dem Latentwärmespeicher an.

Zur Herstellung eines funktionsfähigen Heizkörpers sind bislang erhebliche Montagearbeiten erforderlich, die manuell ausgeführt werden und einer kostenoptimierten Herstellung entgegenstehen.

Erschwert werden die Montagearbeiten dadurch, dass die im Innern des Gehäuses platzierten Funktionsteile, wie der Latentwärmespeicher und das Heizelement, separat in das relativ eng dimensionierte Gehäuse eingebracht werden müssen.

Der hohen Akzeptanz des bekannten Heizkörpers stehen jedoch die genannten Montagekosten entgegen.

Der Erfindung liegt die Aufgabe zugrunde, einen Heizkörper der gattungsgemäßen Art sowie ein Verfahren zur Herstellung des Heizkörpers so weiterzuentwickeln, dass eine kostengünstigere Herstellung möglich ist.

Diese Aufgabe wird durch einen Heizkörper mit den Merkmalen des Anspruchs 1 sowie ein Verfahren mit den Merkmalen des Anspruchs 13 gelöst.

Der neue Heizkörper zeichnet sich zunächst einmal dadurch aus, dass er wesentlich einfacher montierbar ist, wobei die erfindungsgemäße Baueinheit, zumindest enthaltend den Wärmespeicher und das Heizelement, die durch eine Verschalung umhüllt sind, praktisch nur in das gleichfalls vorgefertigte Gehäuse eingeschoben werden muss.

Dabei kann die vormontierte Baueinheit in einem kontinuierlichen, zumindest teil- oder vollautomatisierten Arbeitsablauf hergestellt werden, quasi im Sinne einer Serienfertigung.

Naturgemäß ist dies mit geringen Kosten verbunden, zu denen im Übrigen auch eine vereinfachte Lagerung vormontierter Baueinheiten beiträgt, die konfektioniert vorliegen können und mit denen bedarfsweise das jeweilige Gehäuse bestückt wird.

Bevorzugt besteht die Verschalung aus zwei aus Blech geformten Halbschalen, mit jeweils einer planen Grundfläche und einem abgewinkelten umlaufenden Rand. Durch die Ausbildung aus einem geeigneten Blech kann eine Infrarot-Strahlungsemission gewünscht gering gehalten werden.

Die beiden Halbschalen sind im Übrigen miteinander verbunden, bevorzugt lösbar, so dass ein problemloser Austausch eines defekten Funktionsteils, beispielsweise des Wärmespeichers oder des Heizelementes, möglich ist.

Das Heizelement kann aus einer Heizschlange oder einer Heizfolie bestehen mit einem integrierten Temperaturfühler, über den die Wärmeabgabe an den Wärmespeicher regelbar ist.

Zwei Wärmespeicher, die vorzugsweise plattenförmig sind, schließen eine Einheit aus einem Stützgitter und dem daran befestigten Heizelement ein, wobei diese Einheit, soweit dies technisch machbar ist, mittig der Baueinheit angeordnet ist.

Das genannte Stützgitter besteht aus Kunststoff oder Metall und ist mit Verbindungsmitteln versehen, zum Anschluss an die Verschalung, so dass ein Ausbeulen der Verschalung verhindert wird, wenn der beispielsweise Latentwärmespeicher beim Aufheizen seine Konsistenz hin zu einer größeren Weichheit verändert. Zweckmäßigerweise sind eine Vielzahl von Verbindungsmitteln gleichmäßig über die gesamte Fläche verteilt.

Das Heizelement und das Stützgitter sind in die beidseitig zugeordneten Wärmespeicher, d.h. die z.B. PCM-Platten, eingebettet, die aus einem zuvor als Granulat eingebracht zu einem festen, dann einstückigen Block geformt sein können.

Nach einem weiteren Gedanken der Erfindung ist das als Heizschlange ausgebildete Heizelement in das Stützgitter eingelassen, wozu beispielsweise Stege des Stützgitters mit Nuten versehen sind, in die das Heizelement eingelegt und bevorzugt gekapselt ist. Das Stützgitter kann anschließend vollständig mit dem Latentwärmespeicher umspritzt bzw. umgossen werden.

Zur Verschalung hin kann eine Dampfsperre vorgesehen sein, zur Minimierung von Geruchsemmissionen, wie sie bei der Erwärmung des Latentwärmespeichers entstehen, wenn dieser aus einem Paraffin besteht.

Nach dem erfindungsgemäßen Verfahren wird zunächst in eine Halbschale der Verschalung ein flächiger Wärmespeicher eingelegt, gegebenenfalls mit einer Zwischenlage als Dampfsperre, der die Auflageseite der Halbschale weitgehend verdeckt, d.h., der in seinen äußeren Abmaßen den lichten Abmaßen der Halbschale entspricht. Danach werden das Stützgitter und das Heizelement, die bevorzugt in einem vorherigen Arbeitsschritt miteinander verbunden sind, auf den plattenförmigen Wärmespeicher aufgelegt.

Anschließend wird die Einheit Stützgitter/Heizelement von einem weiteren plattenförmigen Wärmespeicher abgedeckt, gegebenenfalls auch von zwei übereinander liegenden, bevor die zweite Halbschale aufgesetzt und mit der ersten verbunden wird. Wie erwähnt kann der Wärmespeicher als Latentwärmespeicher in Form eines Granulats eingebracht werden.

Weitere vorteilhafte Ausbildungen der Erfindung sind in den Unteransprüchen gekennzeichnet.

Ein erfindungsgemäßer Heizkörper sowie ein Verfahren zu dessen Herstellung werden nachfolgend anhand der beigefügten Zeichnungen beschrieben.

Es zeigen:
- Figur 1: einen Teil eines elektrisch betreibbaren Heizkörpers in einer Explosionsdarstellung

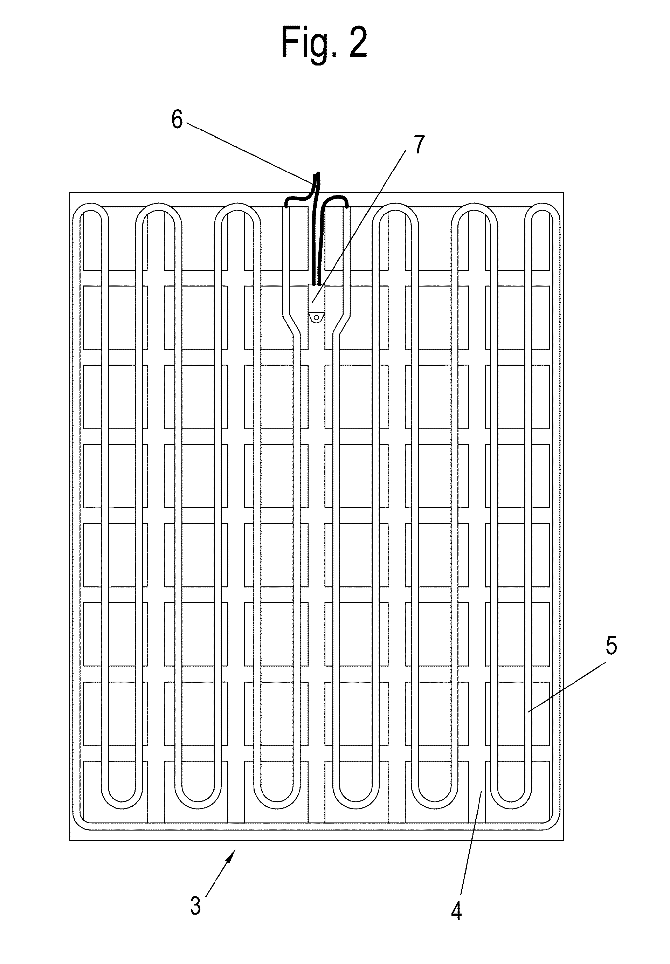

- Figur 2: eine Einzelheit des Heizkörpers in einer Vorderansicht
- Figur 3: einen Ausschnitt eines Einzelteils eines weiteren Ausführungsbeispiels des erfindungsgemäßen Heizkörpers in einer perspektivischen Ansicht.

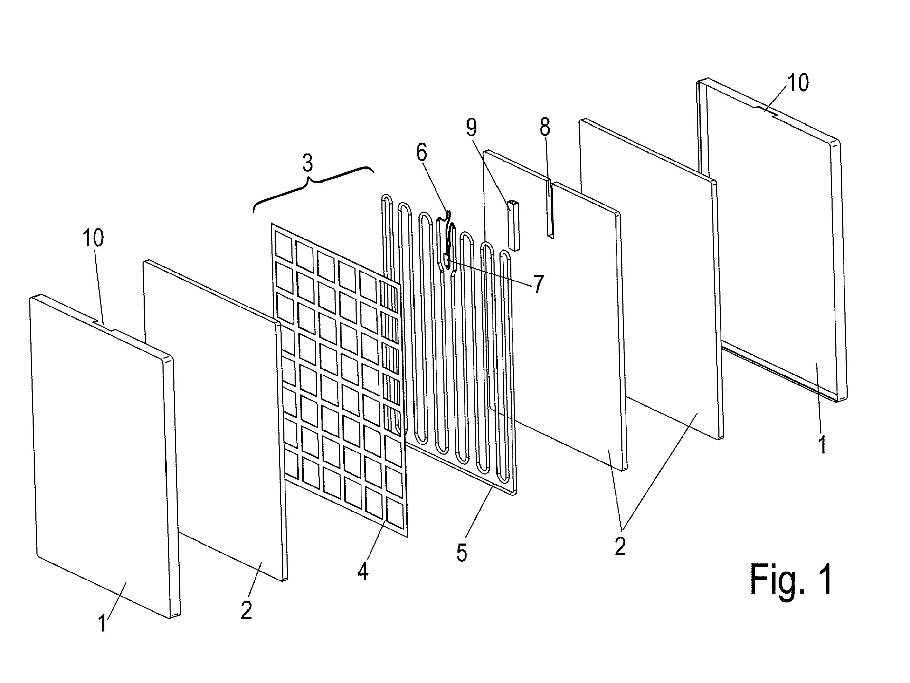

In der Figur 1 ist ein Teil eines elektrisch betreibbaren Heizkörpers dargestellt, mit mehreren plattenförmigen Wärmespeichern 2, einem Stützgitter 4 sowie einem Heizelement 5, wobei die Wärmespeicher 2, das Stützgitter 4 und das Heizelement 5 zu einer vormontierten Einheit 3 zusammengefasst sind und von zwei, eine Verschalung bildenden Halbschalen 1 mantelartig umhüllt sind.

Diese, ein Modul bildende Baueinheit ist in ein nicht dargestelltes Gehäuse einsetzbar.

Das Heizelement 5, das mäanderförmig verlaufende Heizdrähte aufweist, ist mit dem Stützgitter 4 verbunden und über einen elektrischen Anschluss 6, dessen beide Anschlussleitungen gemeinsam mittig einer Seite an ein bauseitiges Stromnetz anschließbar sind, wobei das Heizelement 5 und das Stützgitter 4 als Einheit 3 vormontiert sind.

Ein Temperaturfühler 7, der mit dem Heizelement 5 verdrahtet ist und über den die Leistungsaufnahme regelbar ist, ist direkt in den zugeordneten Wärmespeicher 2 eingebettet.

Die Anordnung des Heizelementes 5 erfolgt so, dass es, gemeinsam mit dem Stützgitter 4 etwa mittig der Baueinheit positioniert ist, so dass eine gleichmäßige Verteilung der Wärme in die Wärmespeicher 2 erfolgt.

Einer der Einheit 3 zugeordneten Wärmespeicher 2 ist mit einem Schlitz 8 versehen, in den eine von außen zugängliche, den Temperaturfühler beherbergende Aufnahmehülse 9 eingesetzt ist, die bevorzugt am Stützgitter 4 positioniert ist. Zur Einführung der Aufnahmehülse 9 sind an den Halbschalen 1 Ausnehmungen 10 angeordnet.

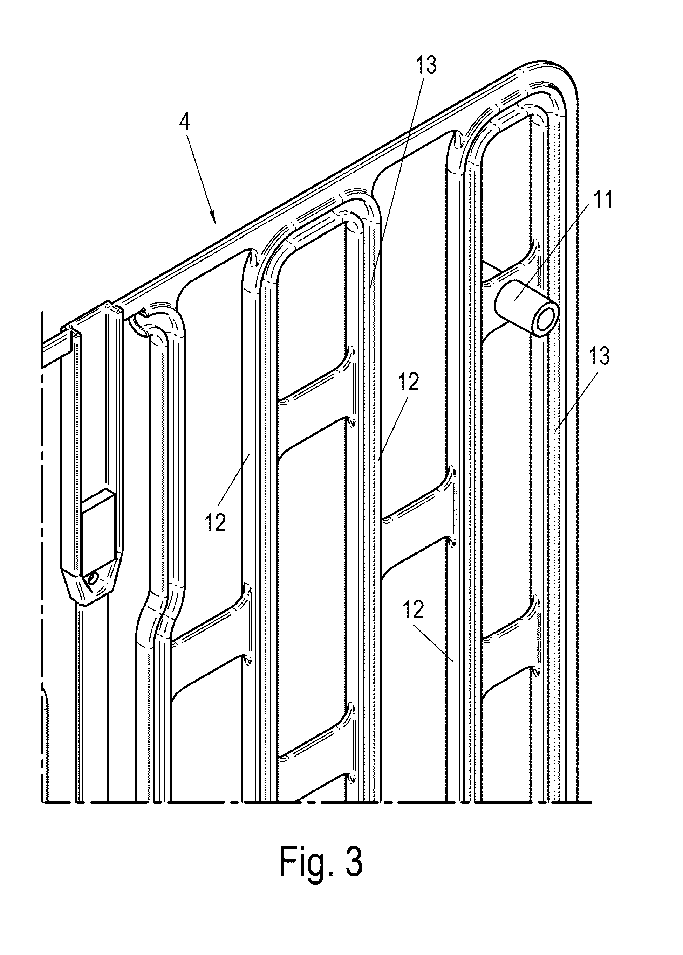

Das Stützgitter 4 ist mit Schraubdomen 11 (Fig. 3) versehen, die gleichmäßig über die Fläche verteilt sind und über die ein Anschluss an die Halbschalen 1 erfolgt, womit eine Versteifung der Halbschalen 1 erreicht wird, die bevorzugt aus einem dünnen Blech bestehen.

In der Figur 3 ist ein Ausschnitt eines weiteren Ausführungsbeispiels des Stützgitters 4 gezeigt, bei dem Streben 12, die zusammen mit einem umfänglichen Rahmen das Gerüst für das Stützgitter 4 bilden, zumindest teilweise mit Nuten 13 versehen sind.

Diese wiederum dienen der Aufnahme des Heizelementes 5, wobei die Nuten 13 in ihrer Querschnittskontur und ihrem Querschnittsabmaß der entsprechenden Kontur bzw. dem entsprechenden Abmaß des Heizelementes angepasst sind, so dass sich eine zumindest bündige Fläche ergibt. Denkbar ist auch, die Nuten 13 so tief auszubilden, dass das Heizelement 5 versenkt einliegt.

Das Stützgitter 4 kann insgesamt mit dem Wärmespeicher 2 überdeckt sein, beispielsweise durch Umgießen, wobei dann auch die zwischen den Streben 12 gebildeten Räume ausgefüllt sind.

Bevorzugt wird zuvor das Stützgitter im Bereich seiner offenen Nuten 13, in die das Heizelement 5 eingesetzt ist, von einem geeigneten Material überdeckt, so dass sich ein guter Wärmeübergang von dem Heizelement 5 zu dem Wärmespeicher 2 ergibt.

## Patentansprüche

1. Elektrisch betreibbarer Heizkörper, mit mindestens einem in einem Gehäuse angeordneten Wärmespeicher (2), insbesondere einem Latentwärmespeicher und einem damit in Wirkverbindung stehenden elektrisch betreibbaren Heizelement (5), **dadurch gekennzeichnet, dass** der mindestens eine Wärmespeicher (2) zusammen mit dem Heizelement (5) in einer einen Mantel bildenden Verschalung angeordnet sind, die gemeinsam als vormontierte Baueinheit im Gehäuse positioniert sind.

2. Heizkörper nach Anspruch 1, **dadurch gekennzeichnet, dass** die Verschalung aus zwei Halbschalen (1), vorzugsweise aus Blech, besteht.

3. Heizkörper nach Anspruch 1 oder 2, **dadurch gekennzeichnet, dass** das Heizelement (5) an einem Stützgitter (4) gehalten ist.

4. Heizkörper nach einem der vorhergehenden Ansprüche, **dadurch gekennzeichnet, dass** das Heizelement (5) mäanderförmig verlaufende Heizdrähte aufweist.

5. Heizkörper nach einem der vorhergehenden Ansprüche, **dadurch gekennzeichnet, dass** das Stützgitter (4) mit der Verschalung verbunden ist.

6. Heizkörper nach einem der vorhergehenden Ansprüche, **dadurch gekennzeichnet, dass** das Heizelement (5) und das Stützgitter (4) als vormontierte Einheit (3) vorgesehen sind.

7. Heizkörper nach einem der vorhergehenden Ansprüche, **dadurch gekennzeichnet, dass** mehrere Wärmespeicher (2) vorgesehen sind, die jeweils plattenförmig ausgebildet sind.

8. Heizkörper nach einem der vorhergehenden Ansprüche, **dadurch gekennzeichnet, dass** die Einheit (3) in die zugeordneten Wärmespeicher (2) eingebettet ist.

9. Heizkörper nach einem der vorhergehenden Ansprüche, **dadurch gekennzeichnet, dass** zwischen dem einliegenden Wärmespeicher (2) und der zugeordneten Halbschale (1) eine Dampfsperre angeordnet ist.

10. Heizkörper nach einem der vorhergehenden Ansprüche, **dadurch gekennzeichnet, dass** das Heizelement (5) mit einem Temperaturfühler (7) versehen ist, über den die Stromzufuhr regelbar ist.

11. Heizkörper nach einem der vorhergehenden Ansprüche, **dadurch gekennzeichnet, dass** der Temperaturfühler (7) im zugeordneten Wärmespeicher (2) eingebettet ist.

12. Heizkörper nach einem der vorhergehenden Ansprüche, **dadurch gekennzeichnet, dass** zumindest ein Teil der Streben (12) des Stützgitters (4) mit einer Nut (13) versehen ist, in der das Heizelement (5) einliegt.

13. Verfahren zur Herstellung eines Heizkörpers nach Anspruch 1, **dadurch gekennzeichnet, dass** die Vormontage der Baueinheit in folgenden Schritten erfolgt:
a) ein Wärmespeicher (2) wird in eine Halbschale (1) gelegt,
b) ein Stützgitter (4) und das Heizelement (5) werden auf dem Wärmespeicher (2) positioniert,
c) mindestens ein weiterer Wärmespeicher (2) wird auf das Heizelement (5) oder das Stützgitter (4) gelegt,
d) mit einer zweiten Halbschale (1) wird der Wärmespeicher (2) abgedeckt,
e) beide Halbschalen (1) werden miteinander verbunden.

14. Verfahren nach Anspruch 13, **dadurch gekennzeichnet, dass** das Stützgitter (4) und das Heizelement (5) vor der Herstellung der Baueinheit zu einer vormontierten Einheit (3) zusammengefasst werden.

15. Verfahren nach Anspruch 13 oder 14, **dadurch gekennzeichnet, dass** der Wärmespeicher (2) als Granulat eingebracht wird.
